# EUROPÄISCHE PATENTSCHRIFT

(11) **EP 3 612 794 B1**
(45) Veröffentlichungstag und Bekanntmachung des Hinweises auf die Patenterteilung: **12.01.2022**
(21) Anmeldenummer: 18717867.8
(22) Anmeldetag: 03.04.2018
(51) Int. Cl.: G01B 11/275

(54) **VERFAHREN UND VORRICHTUNG ZUR FAHRWERKSVERMESSUNG**
METHOD AND DEVICE FOR PERFORMING A WHEEL ALIGNMENT CHECK
PROCÉDÉ ET DISPOSITIF DE CONTRÔLE DE LA GÉOMÉTRIE DES TRAINS ROULANTS

(30) Priorität: 20.04.2017 DE 102017206625
(43) Veröffentlichungstag der Anmeldung: 26.02.2020
(73) Patentinhaber: Beissbarth GmbH, 80993 München (DE)
(72) Erfinder: KRUEGER, Christof, 85757 Karlsfeld (DE)
(74) Vertreter: Schmitt-Nilson Schraud Waibel Wohlfrom Patentanwälte Partnerschaft mbB
(86) Internationale Anmeldenummer: PCT/EP2018/058439
(87) Internationale Veröffentlichungsnummer: WO 2018/192769

(56) Entgegenhaltungen:
- WO-A1-2007/059935
- DE-A1- 19 757 760
- DE-A1- 19 934 864
- DE-A1-102005 017 624
- DE-A1-102005 063 083

## Beschreibung

Die Erfindung betrifft ein Verfahren zur Fahrwerksvermessung nach Anspruch 1 und eine Vorrichtung zur Fahrwerksvermessung nach Anspruch 10; insbesondere ein Verfahren und eine Vorrichtung zur Vermessung eines Fahrwerks eines an der Vorrichtung vorbeifahrenden Fahrzeugs.

### Stand der Technik

Bei den derzeit üblichen Geräten und Verfahren zur Fahrwerksvermessung wird in der Regel die Lage aller Räder eines Fahrzeugs zum gleichen Zeitpunkt bestimmen. Dazu beobachten z.B. mehrere Kameras Messtafeln ("Targets") o.Ä., die an den Rädern des Fahrzeugs angebracht sind. In alternativen Verfahren wird die Lage aller Räder direkt aus Kamerabildern berührungslos bestimmt.

Auf diese Weise können verschiedene Fahrwerksparameter wie z.B. Gesamtspur/Einzelspur/Sturz/Fahrachswinkel und diverse Versätze, wie Seitenversatz, Radversatz usw. direkt bestimmt werden.

Bei Messprinzipien, die gleichzeitig lediglich ein Rad beobachten, gibt es folgende Möglichkeiten, die gesamte Fahrzeuggeometrie zu bestimmen:
- Verwendung von vier Messwertaufnehmern, die gleichzeitig jeweils ein Rad beobachten und Bildung eines Gesamtverbunds durch die Hinzunahme eines Referenzsystems;
- Verwendung von zwei Messwertaufnehmern, die an einem still stehenden Fahrzeug beide Achsen nacheinander vermessen. In diesem Fall ist nur eine Referenzierung zwischen der linken und der rechten Seite des Fahrzeugs erforderlich, da der Bezug von vorne nach hinten durch die bekannte Translation der Messgeräte auf Schienen, die parallel zur Längsrichtung des Fahrzeugs verlaufen, gegeben ist.

WO 2007/059935 A1 offenbart Vorrichtung zur Erfassung einer Profiltiefe und/oder einer Profilart eines Fahrzeugreifens, aufweisend: eine Profilmesseinrichtung, ein Kamerasystem zur Erfassung des Fahrzeuges, eine Auswerteeinheit, welche die Profilmesseinrichtung und das Kamerasystem miteinander koppelt; und mindestens eine der folgenden Baugruppen: eine Geschwindigkeitsmesseinrichtung zur Erfassung der Fahrzeuggeschwindigkeit, und eine Fahrtrichtungsmesseinrichtung zur Erfassung der Lenksituation bzw. Bewegungsrichtung des Fahrzeuges. Die Auswerteeinheit ist ausgelegt, ein Messsignal zur aktuellen Beschleunigung des Fahrzeuges zu erzeugen und die Steuerung ist ausgelegt, eine Auswertung nur zuzulassen, wenn sich das Fahrzeug in einem vorgegebenen Rahmen bei einer verhältnismäßig gleichmäßigen Geschwindigkeit befindet. Mittels der Auswerteeinheit ist ein Messsignal zur Bewegungsrichtung des Fahrzeuges erzeugbar und das Messsignal ist für eine Steuerung der Auswertung der Profilmessung vorgesehen. Die Steuerung ist ausgelegt, eine Auswertung nur dann zuzulassen, wenn sich das Fahrzeug in einem vorgegebenen Rahmen in Geradeauslauf befindet.

Verfahren und Vorrichtungen zur Bestimmung der Fahrachse und/oder der Rad- und Achsgeometrie eines Fahrzeugs mittels einer oder mehrerer Kameras bei Vorbeifahrt des Fahrzeugs werden in DE 19 757 760 A1, DE 19 934 864 A1, DE 10 2005 017 624 A1 und DE 10 2005 063 083 A1 beschrieben.

Es ist eine Aufgabe der Erfindung, ein verbessertes Verfahren und eine verbesserte Vorrichtung zur Fahrwerksvermessung bereitzustellen, die es ermöglichen, die Fahrwerksvermessung an einem vorbeifahrenden Fahrzeug mit möglichst wenigen Messwertaufnehmern auf möglichst geringem Raum durchzuführen.

### Offenbarung der Erfindung:

Gemäß einem Ausführungsbeispiel der Erfindung umfasst ein Verfahren zur Fahrwerksvermessung unter Verwendung von zwei Messwertaufnehmern mit einem zu vermessenden Fahrzeug zwischen den beiden Messwertaufnehmern hindurch zu fahren, wobei jeder der beiden Messwertaufnehmer jeweils wenigstens zwei Bilder eines an der Vorderachse montierten Rades (Vorderrad) und eines an der Hinterachse des Fahrzeugs montierten Rades (Hinterrad) aufnimmt; die von den Messwertaufnehmern aufgenommenen Bilder auszuwerten, um zu bestimmen, ob das Fahrzeug geradlinig zwischen den beiden Messwertaufnehmern hindurch gefahren ist; und, wenn das Auswerten der von den Messwertaufnehmern aufgenommenen Bilder ergeben hat, dass das Fahrzeug geradlinig gefahren ist, die von den Messwertaufnehmern aufgenommenen Bilder auszuwerten und die geometrische Fahrachse des Fahrzeugs zu bestimmen.

Gemäß einem Ausführungsbeispiel der Erfindung umfasst eine Vorrichtung zur Fahrwerksvermessung wenigstens zwei Messwertaufnehmer, die derart angeordnet sind, dass ein zu vermessendes Fahrzeug zwischen den wenigstens zwei Messwertaufnehmern hindurch fahren kann, wobei jeder der Messwertaufnehmer ausgebildet ist, jeweils wenigstens zwei Bilder eines an der Vorderachse montierten Rades und eines an der Hinterachse montierten Rades eines vorbeifahrenden Fahrzeugs aufzunehmen; sowie eine Auswertungsvorrichtung, die ausgebildet ist, die wenigstens zwei von den Messwertaufnehmern aufgenommenen Bilder eines an der Vorderachse montierten Rades und eines an der Hinterachse montierten Rades eines vorbeifahrenden Fahrzeugs auszuwerten, um zu bestimmen, ob das Fahrzeug geradeaus gefahren ist. Die Auswertungsvorrichtung ist weiter ausgebildet, die geometrische Fahrachse des Fahrzeugs zu bestimmen, wenn das Auswerten der von den Messwertaufnehmern aufgenommenen Bilder ergeben hat, dass das Fahrzeug geradeaus (geradlinig) zwischen den beiden Messwertaufnehmern hindurch gefahren ist.

Ein Verfahren und eine Vorrichtung gemäß Ausführungsbeispielen der Erfindung ermöglichen es, die Achsvermessung schnell und bequem "im Vorbeifahren" an den Messwertaufnehmern durchzuführen.

Wenn das Fahrzeug während der Messung geradeaus fährt, entspricht seine geometrische Fahrachse der beobachteten Fahrtrichtung. Die Einzelspuren der Räder an der Vorderachse ergeben sich als Winkel zwischen der geometrischen Fahrachse und der beobachteten Radlage um eine zur Fahrbahnebene senkrecht stehende Achse.

In einer Ausführungsform umfasst das Verfahren auch, die Einzelspuren der Räder an der Vorderachse des Fahrzeugs zu bestimmen.

In einer Ausführungsform umfasst das Bestimmen, ob das Fahrzeug geradeaus gefahren ist, die Spurrichtung eines Rades in Bezug auf den Messwertaufnehmer zu mehreren Zeitpunkten zu bestimmen, um festzustellen, ob sich das Rad während der Vorbeifahrt um eine vertikale Achse, die senkrecht zum Boden des Messplatzes ausgerichtet ist, gedreht hat.

In einer Ausführungsform umfasst das Bestimmen, ob das Fahrzeug geradeaus gefahren ist, jeweils den von den Rädern auf der linken und der rechten Seite des Fahrzeugs zurückgelegten Weg (Rolldistanz) zu bestimmen, und die Rolldistanz eines auf der linken Seite des Fahrzeugs montierten Rades mit der Rolldistanz eines auf der rechten Seite des Fahrzeugs montierten Rades zu vergleichen. Wenn das Fahrzeug geradeaus gefahren ist, sind die Rolldistanzen des linken und des rechten Rades, innerhalb einer vorgegebenen Toleranz, identisch. Bei einer Kurvenfahrt ist die Rolldistanz des kurvenäußeren Rades größer als die Rolldistanz des kurveninneren Rades.

Auf diese Weise kann mit hoher Zuverlässigkeit festgestellt werden, ob das Fahrzeug geradeaus gefahren ist.

In einer Ausführungsform umfasst das Verfahren, in einem Fall, in dem das Auswerten der von den Messwertaufnehmern aufgenommenen Bilder ergeben hat, dass das Fahrzeug nicht geradeaus gefahren ist, eine (gekrümmte) Trajektorie des Fahrzeugs zu bestimmen und die Trajektorie unter Verwendung eines mathematischen Modells des Fahrzeugs zu kompensieren, um eine kompensierte Trajektorie zu erhalten, die einer Geradeausfahrt des Fahrzeugs entspricht. Aus der kompensierten Trajektorie können dann die geometrische Fahrachse des Fahrzeugs so wie bei einer Geradeausfahrt bestimmt werden.

Zusätzlich können die Einzelspuren der Räder an der Vorderachse des Fahrzeugs bestimmt werden.

Bei gelenktem Fahrzeug (Kurvenfahrt) fahren alle Räder des Fahrzeugs auf Kreisbahnen um einen gemeinsamen Mittelpunkt. Aus mindestens einem beobachteten Bogenabschnitt kann dieser gemeinsame Mittelpunkt geschätzt werden. Wird die erste Beobachtung der Vorderachse als Referenz genommen, können alle nachfolgenden Messungen um den beobachteten Fahrweg um den geschätzten Mittelpunkt geometrisch auf einen gemeinsamen Referenzzeitpunkt "zurückgedreht" werden. Dann liegen die so kompensierten Beobachtungen übereinander und weisen keine Verfälschungen der Winkel aufgrund der Lenkbewegung mehr auf.

Wenn auf jeder Seite des Fahrzeugs nur ein Messwertaufnehmer vorhanden ist, können die Räder an der Vorderachse und an der Hinterachse nicht gleichzeitig beobachtet werden. Nach der letzten Beobachtung (Bildaufnahme) des an der Vorderachse montierten Rades vergeht eine gewisse Zeit, bis es zur ersten Beobachtung (Bildaufnahme) des an der Hinterachse montierten Rades kommt. Der dazwischen zurückgelegte Weg kann z.B. durch Interpolation der beobachteten Fahrgeschwindigkeiten zwischen Vorder- und Hinterachse abgeschätzt werden. So können die Beobachtungen der Räder an der Hinterachse um den richtigen Winkel "zurückgedreht" werden.

Durch Kompensieren der Trajektorie, d.h. durch "Herausrechnen" der Krümmung aus der Trajektorie, können die geometrische Fahrachse des Fahrzeugs; und die Einzelspuren der Räder, die an der Vorderachse des Fahrzeugs montiert sind, auch bestimmt werden, wenn das Fahrzeug nicht geradlinig an den Messwertaufnehmern vorbeigefahren ist. Messfehler, die sich aus einer nicht geradlinigen Trajektorie ergeben würden, können auf diese Weise vermieden werden, ohne dass es notwendig ist, die Vorbeifahrt geradlinig zu wiederholen.

In einer Ausführungsform umfasst das Verfahren, zusätzlich die Symmetrieachse, d.h. die Verbindungslinie der Mittelpunkte der Vorder- und Hinterachsen, des Fahrzeugs zu berechnen. Dies ist möglich, wenn der Radstand, d.h. der Abstand zwischen der Vorderachse und der Hinterachse, des Fahrzeugs bekannt ist.

Die Symmetrieachse kann aus 3D-Beobachtungen der Radzentren bestimmt werden, sofern der Radstand bekannt ist, da hierdurch ein Bezug zwischen den Messungen der Vorderachse und Hinterachse hergestellt werden kann. Bei Geradeausfahrt kann angenommen werden, dass zwischen der Durchfahrt der Vorderachse und der Durchfahrt der Hinterachse keine Drehung des Fahrzeugs um eine vertikale Achse stattgefunden hat.

Ist die Symmetrieachse bekannt, kann auch der Fahrachswinkel, d.h. der Winkel zwischen der geometrischen Fahrachse und der Symmetrieachse des Fahrzeugs bestimmt werden.

Wenn die Symmetrieachse bekannt ist, können aus 3D-Beobachtungen der Räder an der Hinterachse die Einzelspuren der Räder an der Hinterachse bestimmt werden.

In einer Ausführungsform wird der Radstand des Fahrzeugs manuell eingegeben.

In einer Ausführungsform wird der Radstand des Fahrzeugs durch Extrapolation der Koordinaten und/oder durch Interpolation der Geschwindigkeiten der Vorder- und Hinterachsräder des Fahrzeugs bestimmt.

In einer Ausführungsform wird der Radstand des Fahrzeugs durch Beobachten der Vorder- und Hinterräder des Fahrzeugs und Bestimmen des optischen Flusses auf der Fahrzeugkarosserie bestimmt, um die zurückgelegte Strecke zwischen Vorder- und Hinterachse nahtlos bestimmen zu können.

Dies kann durch Tiefeninformationen aus 3D-Punkten oder durch SfM (Structure from Motion)-Algorithmen unterstützt werden. Dafür können Kameras genutzt werden, die in den Messwertaufnehmern verbaut sind, oder Kamerasysteme, die in einer Prüfstraße verbaut sind, z.B. eine Kamera zur Inspektion des Unterbodens oder Kameras eines Reifenprofiltiefenmessgeräts.

Eine erfindungsgemäße Vorrichtung ermöglicht es auch, eine "Schnellannahme-Funktion" zu realisieren, welche die folgenden Schritte umfasst:
- Positionieren des Fahrzeugs vor eine Schnellannahmestation mit zwei Messwertaufnehmern;
- Einstellen des Lenkrads auf eine mittige Position;
- Durchfahren zwischen den Messwertaufnehmern, ohne den Lenkwinkel des Lenkrads zu verändern;
- Ausgeben einer Warnung, wenn festgestellt wird, dass das Fahrzeug nicht geradeaus fährt.

### Kurze Beschreibung der Figuren:

Ein Ausführungsbeispiel der Erfindung wird im Folgenden unter Bezugnahme auf die beigefügten Figuren erläutert. Dabei zeigt:
Figur 1 eine schematische Ansicht eines Messplatzes zur Fahrzeugvermessung mit einem geradlinig über den Messplatz fahrenden Fahrzeug; und
Figur 2 eine schematische Ansicht eines Messplatzes zur Fahrzeugvermessung mit einem entlang einer gekrümmten Linie über den Messplatz fahrenden Fahrzeug.

### Figurenbeschreibung

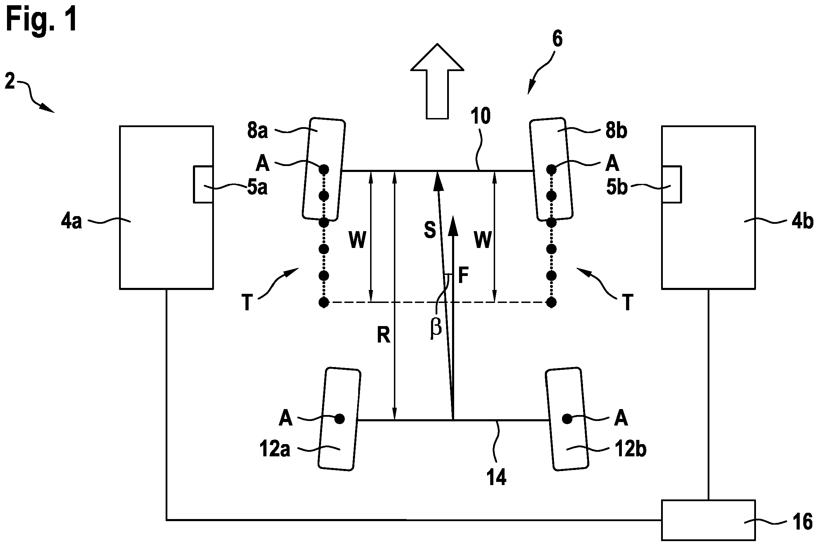

Figur 1 ist eine schematische Ansicht eines Messplatzes 2 zur Fahrzeugvermessung mit einem geradlinig über den Messplatz 2 fahrenden Fahrzeug 6 und zwei Messwertaufnehmern 4a, 4b.

Von dem Fahrzeug 6 sind in der schematischen Darstellung der Figur 1 nur die Vorderachse 10, die Hinterachse 14, die Vorderräder 8a, 8b und die Hinterräder 12a, 12b gezeigt.

Die Messwertaufnehmer 4a, 4b sind so angeordnet, dass das Fahrzeug 6 zwischen ihnen hindurch fahren kann. Auf der dem Fahrzeug 6 zugewandten Seite weist jeder der Messwertaufnehmer 4a, 4b eine optische Bildaufnahmevorrichtung 5a, 5b auf, die insbesondere als Mono- oder Stereo-Kamera 5a, 5b ausgebildet sein kann, und die ausgebildet ist, Bilder der Räder 8a, 8b, 12a, 12b des an den Messwertaufnehmern 4a, 4b vorbeifahrenden Fahrzeugs 6 aufzunehmen.

Die Messwertaufnehmer 4a, 4b sind drahtlos oder drahtgebunden mit einer Auswertungsvorrichtung 16 verbunden, die ausgebildet ist, die von den Messwertaufnehmern 4a, 4b zur Verfügung gestellten Signale, insbesondere Bilddaten, auszuwerten, wie es im Folgenden beschrieben ist.

Um eine Fahrzeugvermessung gemäß einem Ausführungsbeispiel der Erfindung durchzuführen, wird das Fahrzeug 6 zwischen den beiden Messwertaufnehmern 4a, 4b hindurch gefahren. In dem in der Figur 1 gezeigten Ausführungsbeispiel fährt das Fahrzeug 6 entlang einer geraden Linie zwischen den beiden Messwertaufnehmern 4a, 4b hindurch.

Von den in den Messwertaufnehmern 4a, 4b angeordneten Bildaufnahmevorrichtungen 5a, 5b werden Bilder der Räder 8a, 8b, 12a, 12b des Fahrzeugs 6 aufgenommen und in der Auswertungsvorrichtung 16 ausgewertet.

Im Zuge der Auswertung wird zunächst festgestellt, ob das Fahrzeug 6 entlang einer geraden Linie durch die beiden Messwertaufnehmer 4a, 4b gefahren ist.

Dazu kann beispielsweise bestimmt werden, ob sich die Räder 8a, 8b, 12a, 12b während der Durchfahrt des Fahrzeugs 6 um eine vertikale Achse A, die senkrecht zum Boden des Messplatzes 2 ausgerichtet ist, gedreht haben.

Alternativ oder zusätzlich kann der von den Rädern 8a, 8b, 12a, 12b auf der linken und der rechten Seite des Fahrzeugs 6 zurückgelegte Weg (Rolldistanz W) bestimmt werden und die Rolldistanz W eines auf der linken Seite des Fahrzeugs 6 montierten Rades 8a, 12a mit der Rolldistanz W eines auf der rechten Seite des Fahrzeugs 6 montierten Rades 8b, 12b verglichen werden. Bei einer Geradeausfahrt sind die Rolldistanzen W des linken Rades 8a, 12a und des rechten Rades 8b, 12b, innerhalb einer vorgegebenen Toleranz, identisch. Bei einer Kurvenfahrt entlang einer gekrümmten Linie ist die Rolldistanz W des kurvenäußeren Rades 8a, 8b, 12a, 12b größer als die Rolldistanz W des kurveninneren Rades 8a, 8b, 12a, 12b.

Wenn das Auswerten der von den Messwertaufnehmern 4a, 4b aufgenommenen Bilder ergibt, dass das Fahrzeug 6 während der Aufnahmen geradeaus, d.h. entlang einer geraden Linie, gefahren ist, werden die von den Messwertaufnehmern 4a, 4b aufgenommenen Bilder ausgewertet, um die geometrische Fahrachse F des Fahrzeugs 6 und ggf. die Einzelspuren der Räder 8a, 8b, die an der Vorderachse 10 des Fahrzeugs 6 montiert sind, zu bestimmen.

Im Fall einer Geradeausfahrt ergibt sich die geometrische Fahrachse F direkt aus der Winkelhalbierenden der Fahrspuren der Räder 12a, 12b an der Hinterachse 14. Die Einzelspuren der Räder 8a, 8b an Vorderachse ergeben sich durch Bezugnahme der 3D-Normalen der Räder 8a, 8b an der Vorderachse 10 auf die geometrische Fahrachse F.

Wenn der Radstand R, d.h. der Abstand R zwischen der Vorderachse 10 und der Hinterachse 14, des Fahrzeugs 6 bekannt ist, kann zusätzlich die Symmetrieachse S, d.h. die Verbindungslinie der Mittelpunkte der Vorderachse 10 und der Hinterachse 12, des Fahrzeugs 6 berechnet werden.

Die Symmetrieachse S kann insbesondere aus 3D-Beobachtungen der Radzentren bestimmt werden, sofern der Radstand R bekannt ist, da hierdurch ein Bezug zwischen den Messungen der Vorderachse 10 und Hinterachse 14 hergestellt werden kann. Bei einer Geradeausfahrt kann angenommen werden, dass zwischen der Durchfahrt der Räder 8a, 8b an der Vorderachse 10 und der Durchfahrt der Räder 12a, 12b an der Hinterachse 14 keine Drehung des Fahrzeugs 6 um eine senkrecht zum Boden des Messplatzes ausgerichtete Achse A stattgefunden hat.

Ist die Symmetrieachse S bekannt, kann auch der Fahrachswinkel β, d.h. der Winkel β zwischen der geometrischen Fahrachse F und der Symmetrieachse S des Fahrzeugs 6 bestimmt werden.

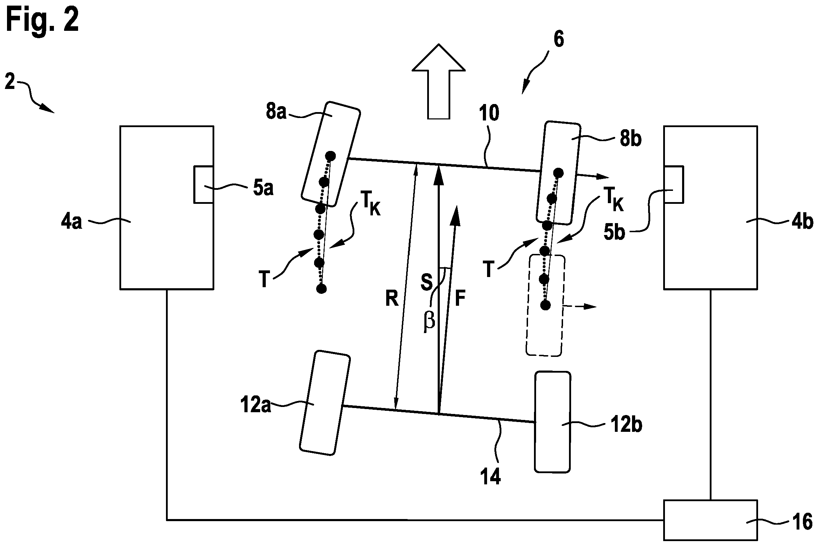

Figur 2 eine schematische Ansicht des Messplatzes 2 zur Fahrzeugvermessung mit einem Fahrzeug 6 und zwei Messwertaufnehmern 4a, 4b, wobei das Fahrzeug 6 aufgrund eines Lenkeinschlags der Räder 8a, 8b an der Vorderachse 10 nicht geradlinig, sondern entlang einer gekrümmten Bahn (Trajektorie) über den Messplatz 2 fährt.

In diesem Fall können die geometrische Fahrachse F des Fahrzeugs 6 und die Einzelspuren der Räder 8a, 8b an der Vorderachse 10 des Fahrzeugs 6 nicht direkt aus der gekrümmten Trajektorie T des Fahrzeugs 7 bestimmt werden.

Wenn das Auswerten der von den Messwertaufnehmern 4a, 4b aufgenommenen Bilder ergeben hat, dass das Fahrzeug 6 nicht geradeaus, sondern entlang einer gekrümmten Trajektorie T über den Messplatz 2 gefahren ist, wir die gekrümmte Trajektorie T unter Verwendung eines mathematischen Modells des Fahrzeugs 6 kompensiert, d.h. in eine kompensierte Trajektorie T_{K} umgerechnet, die einer Geradeausfahrt des Fahrzeugs entspricht.

Bei einem gelenkten Fahrzeug 6 (Kurvenfahrt) fahren alle Räder 8a, 8b, 12a, 12b entlang von Kreisbahnen um einen gemeinsamen Mittelpunkt. Aus mindestens einem beobachteten Bogenabschnitt kann der gemeinsame Mittelpunkt geschätzt werden. Wird die erste Beobachtung der Vorderachse 19 als Referenz genommen, können alle nachfolgenden Messungen um den beobachteten Fahrweg um den geschätzten Mittelpunkt geometrisch auf einen gemeinsamen Referenzzeitpunkt "zurückgedreht" werden. Dann liegen die so kompensierten Beobachtungen übereinander und weisen keine Verfälschungen der Winkel aufgrund der Lenkbewegung mehr auf.

Da auf jeder Seite des Fahrzeugs 6 nur ein Messwertaufnehmer 4a, 4b vorhanden ist, können die Räder 8a, 8ban der Vorderachse 10 nicht gleichzeitig mit den Rädern 12a, 12b an der Hinterachse 14 beobachtet werden. Nach der letzten Beobachtung (Bildaufnahme) eines an der Vorderachse 10 montierten Rades 8a, 8b vergeht eine gewisse Zeit, bis zur ersten Beobachtung (Bildaufnahme) eines an der Hinterachse 14 montierten Rades 12a, 12b. Der zwischen den beiden Beobachtungen (Bildaufnahmen) zurückgelegte Weg kann z.B. durch Interpolation der beobachteten Fahrgeschwindigkeiten zwischen der Vorderachse 10 und der Hinterachse 14 abgeschätzt werden. So können die Bilder der Räder 12a, 12b an der Hinterachse 14 um den richtigen Winkel "zurückgedreht" werden.

Aus der auf diese Weise kompensierten Trajektorie T_{K} können dann die geometrische Fahrachse F des Fahrzeugs 6; und die Einzelspuren der Räder 8a, 8b an der Vorderachse 10 des Fahrzeugs 6 bestimmt werden, wie es zuvor im Zusammenhang mit der Figur 1 für die Geradeausfahrt beschrieben worden ist.

Auch wenn das Fahrzeug 6 nicht geradlinig geradeaus fährt, kann der Radstand R des Fahrzeugs 6 durch Extrapolation der Koordinaten der Räder 8a, 8b, 12a, 12b des Fahrzeugs 6 oder durch Beobachten der Räder 8a, 8b, 12a, 12b des Fahrzeugs 6 und Bestimmen des optischen Flusses bestimmt werden, um mit Hilfe des auf diese Weise bestimmten Radstandes R die Symmetrieachse S des Fahrzeugs 6 zu berechnen.

Im Ergebnis stellt die Erfindung ein verbessertes Verfahren und eine verbesserte Vorrichtung zur Fahrwerksvermessung bereit, die es ermöglichen, die Fahrwerksvermessung an einem vorbeifahrenden Fahrzeug 6 durchzuführen. Ein Verfahren und eine Vorrichtung gemäß Ausführungsbeispielen der Erfindung ermöglichen es insbesondere, die Fahrwerksvermessung auch dann durchzuführen, wenn das Fahrzeug 6 entlang einer gekrümmten Bahn an den Messwertaufnehmern 4a, 4b vorbei fährt.

## Patentansprüche

1. Verfahren zur Fahrwerksvermessung mit zwei Messwertaufnehmern (4a, 4b), wobei das Verfahren umfasst:
mit einem zu vermessenden Fahrzeug (6) zwischen den beiden Messwertaufnehmern (4a, 4b) hindurch zu fahren, wobei jeder der Messwertaufnehmer (4a, 4b) jeweils wenigstens zwei Bilder eines an der Vorderachse (10) des Fahrzeugs (6) montierten Rades (8a, 8b) und eines an der Hinterachse (14) des Fahrzeugs (6) montierten Rades (12a, 12b) aufnimmt;
Auswerten der von den Messwertaufnehmern (4a, 4b) aufgenommenen Bilder, um zu bestimmen, ob das Fahrzeug (6) geradeaus gefahren ist; und
wenn das Auswerten der von den Messwertaufnehmern (4a, 4b) aufgenommenen Bilder ergibt, dass das Fahrzeug (6) geradeaus gefahren ist,
Auswerten der von den Messwertaufnehmern (4a, 4b) aufgenommenen Bilder, und
Bestimmen der geometrischen Fahrachse (F) des Fahrzeugs. (6) aus diesen Bildern.

2. Verfahren nach Anspruch 1, wobei das Verfahren zusätzlich umfasst, die Einzelspuren der Räder (8a, 8b) an der Vorderachse (10) des Fahrzeugs (6) zu bestimmen.

3. Verfahren nach Anspruch 1 oder 2, wobei das Bestimmen, ob das Fahrzeug (6) geradeaus gefahren ist, umfasst, zu mehreren Zeitpunkten die Spurrichtung eines Rades (8a, 8b, 12a, 12b) in Bezug auf den jeweiligen Messwertaufnehmer (4a, 4b) zu bestimmen.

4. Verfahren nach Anspruch 3, wobei das Bestimmen, ob das Fahrzeug (6) geradeaus gefahren ist, umfasst, die Rolldistanz (W) eines auf der linken Seite des Fahrzeugs (6) montierten Rades (8a, 8b, 12a, 12b) mit der Rolldistanz (W) eines auf der rechten Seite des Fahrzeugs (6) montierten Rades (8a, 8b, 12a, 12b) zu vergleichen.

5. Verfahren nach einem der vorangehenden Ansprüche, wobei das Verfahren, wenn das Auswerten der von den Messwertaufnehmern (4a, 4b) aufgenommenen Bilder ergeben hat, dass das Fahrzeug (6) nicht geradeaus gefahren ist, umfasst,
eine Trajektorie (T) des Fahrzeugs (6) zu bestimmen, und
die Trajektorie (T) unter Verwendung eines mathematischen Modells des Fahrzeugs (6) zu kompensieren, um eine kompensierte Trajektorie (T_{K}) zu erhalten, die einer Geradeausfahrt des Fahrzeugs (6) entspricht, und
aus der kompensierten Trajektorie (T_{K}) die geometrische Fahrachse (F) des Fahrzeugs (6) zu bestimmen.

6. Verfahren nach Anspruch 5, wobei das Verfahren zusätzlich umfasst, aus der kompensierten Trajektorie (T_{K}) die Einzelspuren der Räder (8a, 8b) an der Vorderachse (10) des Fahrzeugs (6) zu bestimmen.

7. Verfahren nach einem der vorangehenden Ansprüche, wobei das Verfahren zusätzlich umfasst, die Symmetrieachse (S) des Fahrzeugs (6) zu bestimmen und unter Verwendung der so bestimmten Symmetrieachse (S) die Einzelspuren der Räder (12a, 12b) an der Hinterachse (14) des Fahrzeugs (6) und/oder den Winkel (β) zwischen der Symmetrieachse (S) und der geometrischen Fahrachse (F) des Fahrzeugs (6) zu berechnen.

8. Verfahren nach einem der vorangehenden Ansprüche, wobei das Verfahren umfasst, den Radstand (R) des Fahrzeugs (6) durch Extrapolation der Koordinaten der Räder (8a, 8b, 12a, 12b) des Fahrzeugs (6) zu bestimmen.

9. Verfahren nach einem der vorangehenden Ansprüche, wobei das Verfahren umfasst, den Radstand (R) des Fahrzeugs (6) durch Beobachten der Räder (8a, 8b, 12a, 12b) an der Vorder- und Hinterachse (10, 14) des Fahrzeugs (6) und durch Bestimmen des optischen Flusses zu bestimmen.

10. Vorrichtung zur Fahrwerksvermessung mit
wenigstens zwei Messwertaufnehmern (4a, 4b), die derart angeordnet sind, dass ein zu vermessendes Fahrzeug (6) zwischen den wenigstens zwei Messwertaufnehmern (4a, 4b) hindurch fahren kann, wobei jeder der Messwertaufnehmer (4a, 4b) ausgebildet ist, jeweils wenigstens zwei Bilder eines an der Vorderachse (10) montierten Rades (8a, 8b) und eines an der Hinterachse (14) montierten Rades (12a, 12b) eines vorbeifahrenden Fahrzeugs (6) aufzunehmen; und
einer Auswertungsvorrichtung (16), die ausgebildet ist, die jeweils wenigstens zwei von den Messwertaufnehmern (4a, 4b) aufgenommenen Bilder des an der Vorderachse (10) montierten Rades (8a, 8b) und des an der Hinterachse (14) montierten Rades (12a, 12b) des vorbeifahrenden Fahrzeugs (6) auszuwerten, und aus diesen Bildern zu bestimmen, ob das Fahrzeug (6) geradeaus gefahren ist; und
wenn das Auswerten der von den Messwertaufnehmern (4a, 4b) aufgenommenen Bilder ergeben hat, dass das Fahrzeug (6) geradeaus gefahren ist, und
aus den aufgenommenen Bildern die geometrische Fahrachse (F) des Fahrzeugs (6) zu bestimmen.

11. Vorrichtung nach Anspruch 10, wobei die Auswertungsvorrichtung (16) zusätzlich ausgebildet ist, die Einzelspuren der Räder (8a, 8b) an der Vorderachse (10) des Fahrzeugs (6) zu bestimmen.

12. Vorrichtung nach Anspruch 10 oder 11, wobei die Auswertungsvorrichtung weiter ausgebildet ist, in einem Fall, in dem das Auswerten der von den Messwertaufnehmern (4a, 4b) aufgenommenen Bilder ergeben hat, dass das Fahrzeug (6) nicht geradeaus gefahren ist,
eine Trajektorie (T) des Fahrzeugs (6) zu bestimmen, und
die Trajektorie (T) unter Verwendung eines mathematischen Modells des Fahrzeugs (6) zu kompensieren, um eine kompensierte Trajektorie (T) zu erhalten, die einer Geradeausfahrt des Fahrzeugs (6) entspricht, und
aus der kompensierten Trajektorie (T_{K}) die geometrische Fahrachse (F) des Fahrzeugs (6) zu bestimmen.

13. Vorrichtung nach Anspruch 12, wobei die Auswertungsvorrichtung weiter ausgebildet ist, aus der kompensierten Trajektorie (T_{K}) die Einzelspuren der Räder (8a, 8b) an der Vorderachse (10) des Fahrzeugs (6) zu bestimmen.

14. Vorrichtung nach Anspruch 12 oder 13, wobei die Auswertungsvorrichtung (16) zusätzlich ausgebildet ist,
durch Extrapolation der Koordinaten der Räder (8a, 8b, 12a, 12b) des Fahrzeugs (6), oder
durch Beobachten der Räder (8a, 8b, 12a, 12b) des Fahrzeugs (6) und Bestimmen des optischen Flusses den Radstand (R) des Fahrzeugs (6) zu bestimmen; und
mit Hilfe des auf diese Weise bestimmten Radstandes (R) die Symmetrieachse (S) des Fahrzeugs (6) zu berechnen.

## Claims

1. Method for wheel alignment measurement with two measurement value capturing devices (4a, 4b), the method comprising:
passing by, with a vehicle (6) to be measured, between the two measurement value capturing devices (4a, 4b), each of the measurement value capturing devices (4a, 4b) recording at least two images of a wheel (8a, 8b) mounted at the front axle (10) of the vehicle (6) and at least two images of a wheel (12a, 12b) mounted at the rear axle (14) of the vehicle (6), respectively;
evaluating the images recorded by the measurement value capturing devices (4a, 4b) to determine whether the vehicle (6) has travelled along a straight line; and
if the evaluation of the images recorded by the measurement value capturing devices (4a, 4b) reveals that the vehicle (6) has travelled along a straight line,
evaluating the images recorded by the measurement value capturing devices (4a, 4b), and
determining the geometric travel axis (F) of the vehicle (6) from these images.

2. Method according to claim 1, wherein the method further includes determining the individual tracks of the wheels (8a, 8b) at the front axle (10) of the vehicle (6).

3. Method according to claim 1 or 2,
wherein said determining whether the vehicle (6) has travelled along a straight line comprises determining the track direction of a wheel (8a, 8b, 12a, 12b) with respect to the respective measurement value capturing device (4a, 4b) at a plurality of times.

4. Method according to claim 3,
wherein said determining whether the vehicle (6) has travelled along a straight line comprises comparing the rolling distance (W) of a wheel (8a, 8b, 12a, 12b) mounted at the left side of the vehicle (6) with the rolling distance (W) of a wheel (8a, 8b, 12a, 12b) mounted at the right side of the vehicle (6).

5. Method according to any of the preceding claims,
wherein the method comprises, if the evaluation of the images recorded by the measurement value capturing devices (4a, 4b) has revealed that the vehicle (6) has not travelled along a straight line,
determining a trajectory (T) of the vehicle (6) and
compensating the trajectory (T) using a mathematical model of the vehicle (6) in order to obtain a compensated trajectory (T_{K}) corresponding to traveling of the vehicle (6) along a straight line, and
determining the geometric travel axis (F) of the vehicle (6) from the compensated trajectory (T_{K}).

6. Method according to claim 5 further comprising determining from the compensated trajectory (T_{K}) the individual tracks of the wheels (8a, 8b) at the front axle (10) of the vehicle (6).

7. Method according to any of the preceding claims,
wherein the method additionally comprises determining the axis of symmetry (S) of the vehicle (6) and, using the axis of symmetry (S) thus determined, calculating the individual tracks of the wheels (12a, 12b) at the rear axle (14). of the vehicle (6) and/or the angle (β) between the axis of symmetry (S) and the geometric travel axis (F) of the vehicle (6).

8. Method according to any of the preceding claims,
wherein the method comprises determining the wheelbase (R) of the vehicle (6) by extrapolating the coordinates of the wheels (8a, 8b, 12a, 12b) of the vehicle (6).

9. Method according to any of the preceding claims,
wherein the method comprises determining the wheelbase (R) of the vehicle (6) by observing the wheels (8a, 8b, 12a, 12b) at the front and rear axles (10, 14) of the vehicle (6) and determining the optical flow.

10. Apparatus for wheel alignment measurement, comprising
at least two measurement value capturing devices (4a, 4b) which are arranged such that a vehicle (6) to be measured can pass between the at least two measurement value capturing devices (4a, 4b), each of the measurement value capturing devices (4a, 4b) being configured to record at least two images of a wheel (8a, 8b) mounted at the front axle (10) and at least two images of a wheel (12a, 12b) mounted at the rear axle (14) of a vehicle (6) passing by respectively; and
an evaluation device (16) which is configured to evaluate the at least two images of the wheel (8a, 8b) mounted at the front axle (10) and the at least two images of the wheel (12a, 12b) mounted at the rear axle (14) of the vehicle (6) passing by recorded by the measurement value capturing devices (4a, 4b), respectively, in order to determine from these images whether the vehicle (6) has travelled along a straight line and
if the evaluation of the images recorded by the measurement value capturing devices (4a, 4b) has revealed that the vehicle (6) has travelled along a straight line,
to determine the geometric travel axis (F) of the vehicle (6) from these images.

11. Apparatus according to claim 10, wherein the evaluation device (16) is further configured to determine the individual tracks of the wheels (8a, 8b) at the front axle (10) of the vehicle (6).

12. Apparatus according to claim 10 or 11,
wherein the evaluation device is further configured, in a case in which the evaluation of the images recorded by the measurement value capturing devices (4a, 4b) has revealed that the vehicle (6) has not travelled along a straight line,
to determine a trajectory (T) of the vehicle (6), and
to compensate the trajectory (T) using a mathematical model of the vehicle (6) in order to obtain a compensated trajectory (T) corresponding to traveling of the vehicle (6) along a straight line, and
to determine the geometric travel axis (F) of the vehicle (6) from the compensated trajectory (T_{K}).

13. Apparatus according to claim 12, wherein the evaluation device is further configured to determine, from the compensated trajectory (T_{K}), the individual tracks of the wheels (8a, 8b) at the front axle (10) of the vehicle (6).

14. Apparatus according to claim 12 or 13,
wherein the evaluation device (16) is additionally configured to determine the wheelbase (R) of the vehicle (6)
by extrapolating the coordinates of the wheels (8a, 8b, 12a, 12b) of the vehicle (6), or
by observing the wheels (8a, 8b, 12a, 12b) the vehicle (6) and determining the optical flow; and
to calculate the axis of symmetry (S) of the vehicle (6) with the aid of the wheelbase (R) thus determined.

## Revendications

1. Procédé de contrôle de la géométrie des trains roulants avec deux capteurs de mesure (4a, 4b), ce procédé comprenant :
le passage avec un véhicule automobile (6) à mesurer entre les deux capteurs de mesure (4a, 4b), sachant que chacun des capteurs de mesure (4a, 4b) capture respectivement au moins deux images d'une roue (8a, 8b) montée sur l'essieu avant (10) du véhicule automobile (6) et d'une roue (12a, 12b) montée sur l'essieu arrière (14) du véhicule automobile (6) ;
l'évaluation des images capturées par les capteurs de mesure (4a, 4b) en vue de déterminer si le véhicule automobile (6) a roulé droit ; et,
si l'évaluation des images capturées par les capteurs de mesure (4a, 4b) indique que le véhicule automobile (6) a roulé droit,
l'évaluation des images capturées par les capteurs de mesure (4a, 4b) et
la détermination de l'axe de déplacement géométrique (F) du véhicule automobile (6) à partir de ces images.

2. Procédé selon la revendication 1, ledit procédé comprenant en outre la détermination des traces individuelles des roues (8a, 8b) sur l'essieu avant (10) du véhicule automobile (6).

3. Procédé selon la revendication 1 ou 2, dans lequel le procédé de détermination permettant de savoir si le véhicule automobile (6) a roulé droit, comprend de déterminer, à plusieurs moments, la direction de la trace d'une roue (8a, 8b, 12a, 12b) par rapport au capteur de mesure (4a, 4b) respectif.

4. Procédé selon la revendication 3, dans lequel le procédé de détermination permettant de savoir si (6) le véhicule automobile (6) a roulé droit, comprend de comparer la distance de roulement (W) d'une roue (8a, 8b, 12a, 12b) montée sur le côté gauche du véhicule automobile (6) à la distance de roulement (W) d'une roue (8a, 8b, 12a, 12b) montée sur le côté droit du véhicule automobile (6).

5. Procédé selon l'une quelconque des revendications précédentes, dans lequel, si l'évaluation des images capturées par les capteurs de mesure (4a, 4b) a montré que le véhicule automobile (6) n'a pas roulé droit, le procédé comprend
la détermination d'une trajectoire (T) du véhicule automobile (6) et
la compensation de la trajectoire (T) au moyen d'un modèle mathématique du véhicule automobile (6), afin d'obtenir une trajectoire compensée (Tk) qui correspond à un déplacement en ligne droite du véhicule automobile (6), et,
à partir de la trajectoire compensée (Tₖ), de déterminer l'axe de déplacement (F) du véhicule automobile (6).

6. Procédé selon la revendication 5, ledit procédé comprenant en outre la détermination, à partir de la trajectoire compensée (Tₖ), des traces individuelles des roues (8a, 8b) sur l'essieu avant (10) du véhicule automobile (6).

7. Procédé selon l'une quelconque des revendications précédentes, ledit procédé comprenant en outre la détermination de l'axe de symétrie (S) du véhicule automobile (6) et le calcul, au moyen de l'axe de symétrie (S) ainsi déterminé, des traces individuelles des roues (12a, 12b) sur l'essieu arrière (14) du véhicule automobile (6) et/ou de l'angle (β) formé entre l'axe de symétrie (S) et l'axe de déplacement géométrique (F) du véhicule automobile (6).

8. Procédé selon l'une quelconque des revendications précédentes, ledit procédé comprenant la détermination de l'empattement (R) du véhicule automobile (6) par l'extrapolation des coordonnées des roues (8a, 8b, 12a, 12b) du véhicule automobile (6).

9. Procédé selon l'une quelconque des revendications précédentes, ledit procédé comprenant la détermination de l'empattement (R) du véhicule automobile (6) par l'observation des roues (8a, 8b, 12a, 12b) sur l'essieu avant et l'essieu arrière (10, 14) du véhicule automobile (6) et par la détermination du flux optique.

10. Dispositif de contrôle de la géométrie des trains roulants avec
au moins deux capteurs de mesure (4a, 4b) disposés de telle sorte qu'un véhicule automobile à mesurer (6) peut rouler entre les au moins deux capteurs de mesure (4a, 4b), chacun des capteurs de mesure (4a, 4b) étant réalisé de manière à capturer respectivement au moins deux images d'une roue (8a, 8b) montée sur l'essieu avant (10) et d'une roue (12a, 12b) montée sur l'essieu arrière (14) d'un véhicule automobile (6) passant devant les capteurs ; et
un dispositif d'évaluation (16) réalisé de manière à évaluer les au moins deux images capturées respectivement par les capteurs de mesure (4a, 4b) de la roue (8a, 8b) montée sur l'essieu avant (10) et de la roue (12a, 12b) montée sur l'essieu arrière (14) du véhicule automobile (6) passant devant les capteurs et, à partir de ces images, à déterminer si le véhicule automobile (6) a roulé droit ; et,
si l'évaluation des images capturées par les capteurs de mesure (4a, 4b) a montré que le véhicule automobile (6) a roulé droit, et,
à partir des images capturées, à déterminer l'axe de déplacement géométrique (F) du véhicule automobile (6).

11. Dispositif selon la revendication 10, dans lequel le dispositif d'évaluation (16) est en outre réalisé de manière à déterminer les traces individuelles des roues (8a, 8b) sur l'essieu avant (10) du véhicule automobile (6).

12. Dispositif selon la revendication 10 ou 11, dans lequel le dispositif d'évaluation est en outre réalisé, dans un cas où l'évaluation des images capturées par les capteurs de mesure (4a, 4b) a montré que le véhicule automobile (6) n'a pas roulé droit,
de manière à déterminer une trajectoire (T) du véhicule automobile (6) et à
compenser la trajectoire (T) au moyen d'un modèle mathématique du véhicule automobile (6) afin d'obtenir une trajectoire compensée (Tₖ) qui correspond à un déplacement en ligne droite du véhicule automobile (6), et,
à partir de la trajectoire compensée (Tₖ), à déterminer l'axe de déplacement (F) du véhicule automobile (6).

13. Procédé selon la revendication 12, dans lequel le dispositif d'évaluation est en outre réalisé de manière à déterminer, à partir de la trajectoire compensée (Tₖ), les traces individuelles des roues (8a, 8b) sur l'essieu avant (10) du véhicule automobile (6).

14. Dispositif selon la revendication 12 ou 13, dans lequel le dispositif d'évaluation (16) est en outre réalisé de manière à déterminer l'empattement (R) du véhicule automobile (6)
par l'extrapolation des coordonnées des roues (8a, 8b, 12a, 12b) du véhicule automobile (6) ou
par l'observation des roues (8a, 8b, 12a, 12b) du véhicule automobile (6) et la détermination du flux optique ; et, à l'aide de l'empattement (R) ainsi déterminé, à calculer l'axe de symétrie (S) du véhicule automobile (6).
